(19) Europäisches Patentamt / European Patent Office / Office européen des brevets

(11) **EP 2 176 653 B1**

(12) **EUROPEAN PATENT SPECIFICATION**

(45) Date of publication and mention of the grant of the patent:
**07.09.2011 Bulletin 2011/36**

(21) Application number: **08796603.2**

(22) Date of filing: **25.07.2008**

(51) Int Cl.:
**G01N 27/327** $^{(2006.01)}$

(86) International application number:
**PCT/US2008/071132**

(87) International publication number:
**WO 2009/015319 (29.01.2009 Gazette 2009/05)**

(54) **SYSTEM AND METHODS FOR DETERMINATION OF ANALYTE CONCENTRATION USING TIME RESOLVED AMPEROMETRY**

SYSTEM UND VERFAHREN ZUR BESTIMMUNG DER ANALYTKONZENTRATION MITTELS ZEITAUFGELÖSTER AMPEROMETRIE

SYSTÈME ET PROCÉDÉS POUR DÉTERMINER LA CONCENTRATION D'UNE SUBSTANCE À ANALYSER EN UTILISANT UNE AMPÉROMÉTRIE RÉSOLUE DANS LE TEMPS

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.07.2007 US 952076 P**

(43) Date of publication of application:
**21.04.2010 Bulletin 2010/16**

(73) Proprietor: **NIPRO DIAGNOSTICS, INC.**
**Fort Lauderdale, FL 33309 (US)**

(72) Inventors:
• **KAYIHAN, Ferhan**
**Tacoma, WA 98422-1402 (US)**

• **DENG, David, Z.**
**Weston, FL 33327 (US)**

(74) Representative: **Molnia, David**
**df-mp**
**Fünf Höfe**
**Theatinerstrasse 16**
**80333 München (DE)**

(56) References cited:
**EP-A- 1 256 798      EP-A- 1 522 592**
**US-A1- 2003 096 420      US-A1- 2004 045 821**
**US-B1- 6 251 260**

## Description

Field of the Invention

The present invention relates to the field of diagnostic testing systems for determining the concentration of an analyte in a solution and, more particularly, to systems and methods for measuring an analyte concentration using interpolate time resolved amperometry.

Background of the Invention

The present disclosure relates to a biosensor system for measuring an analyte in a bodily fluid, such as blood. The system includes a process and system for improved determination of analyte concentration over a wide range of analyte concentrations.

Electrochemical sensors have long been used to detect or measure the presence of substances in fluid samples. Electrochemical sensors include a reagent mixture containing at least an electron transfer agent (also referred to as an "electron mediator") and an analyte specific bio-catalytic protein (e.g. a particular enzyme), and one or more electrodes. Such sensors rely on electron transfer between the electron mediator and the electrode surfaces and function by measuring electrochemical redox reactions. When used in an electrochemical biosensor system or device, the electron transfer reactions are monitored via an electrical signal that correlates to the concentration of the analyte being measured in the fluid sample.

The use of such electrochemical sensors to detect analytes in bodily fluids, such as blood or blood-derived products, tears, urine, and saliva, has become important, and in some cases, vital to maintain the health of certain individuals. In the health care field, people such as diabetics, for example, must monitor a particular constituent within their bodily fluids. A number of systems are capable of testing a body fluid, such as, blood, urine, or saliva, to conveniently monitor the level of a particular fluid constituent, such as, cholesterol, proteins, and glucose. Patients suffering from diabetes, a disorder of the pancreas where insufficient insulin production prevents the proper digestion of sugar, have a need to carefully monitor their blood glucose levels on a daily basis. Routine testing and controlling blood glucose for people with diabetes can reduce their risk of serious damage to the eyes, nerves, and kidneys.

A number of systems permit people to conveniently monitor their blood glucose levels. Such systems typically include a test strip where the user applies a blood sample and a meter that "reads" the test strip to determine the glucose level in the blood sample. An exemplary electrochemical biosensor is described in U.S. Patent No. 6,743,635 ('635 patent) which describes an electrochemical biosensor used to measure glucose level in a blood sample. The electrochemical biosensor system is comprised of a test strip and a meter. The test strip includes a sample chamber, a working electrode, a counter electrode, and fill-detect electrodes. A reagent layer is disposed in the sample chamber. The reagent layer contains an enzyme specific for glucose, such as, glucose oxidase, glucose dehydrogenase, and a mediator, such as, potassium ferricyanide or ruthenium hexamine. When a user applies a blood sample to the sample chamber on the test strip, the reagents react with the glucose in the blood sample and the meter applies a voltage to the electrodes to cause redox reactions. The meter measures the resulting current that flows between the working and counter electrodes and calculates the glucose level based on the current measurements.

In some instances, electrochemical biosensors may be adversely affected by the presence of certain blood components that may undesirably affect the measurement and lead to inaccuracies in the detected signal. This inaccuracy may result in an inaccurate glucose reading, leaving the patient unaware of a potentially dangerous blood sugar level, for example. As one example, the particular blood hematocrit level (i.e. the percentage of the amount of blood that is occupied by red blood cells) can erroneously affect a resulting analyte concentration measurement. Another example can include various constituents affecting blood viscosity, cell lysis, concentration of charged species, pH, or other factors that may affect determination of an analyte concentration. For example, under certain conditions temperature could affect analyte readings and calculations.

Variations in a volume of red blood cells within blood can cause variations in glucose readings measured with disposable electrochemical test strips. Typically, a negative bias (i.e., lower calculated analyte concentration) is observed at high hematocrits, while a positive bias (i.e., higher calculated analyte concentration) is observed at low hematocrits. At high hematocrits, for example, the red blood cells may impede the reaction of enzymes and electrochemical mediators, reduce the rate of chemistry dissolution since there less plasma volume to solvate the chemical reactants, and slow diffusion of the mediator. These factors can result in a lower-than-expected glucose reading as less current is produced during the electrochemical process. Conversely, at low hematocrits, less red blood cells may affect the electrochemical reaction than expected, and a higher measured current can result. In addition, the blood sample resistance is also hematocrit dependent, which can affect voltage and/or current measurements.

Several strategies have been used to reduce or avoid hematocrit based variations on blood glucose. For example, test strips have been designed to incorporate meshes to remove red blood cells from the samples, or have included various compounds or formulations designed to increase the viscosity of red blood cell and attenuate the affect of low hematocrit on concentration determinations. Other test strips have included lysis agents and systems configured to determine hemoglobin concentration in an attempt to correct hematocrit. Further, biosensors have been configured to measure hematocrit by measuring optical variations after irradiating the blood sample with light, or measuring hematocrit based on a function of sample chamber fill time. These methods have the disadvantages of increasing the cost and complexity of test strips and may undesirably increase the time required to determine an accurate glucose measurement.

In addition, alternating current (AC) impedance methods have also been developed to measure electrochemical signals at frequencies independent of a hematocrit effect. Such methods suffer from the increased cost and complexity of advanced meters required for signal filtering and analysis.

Accordingly, systems and methods for determining analyte concentration are desired that overcome the drawbacks of current biosensors and improve upon existing electrochemical biosensor technologies.

US 2003/0096420 A1 pertains to a method and apparatus for performing a first measurement on a biological fluid or control, which first measurement varies with both the concentration of a first component and at least one of the presence and concentration of a second component. The method and apparatus perform a second measurement on the biological fluid or control, which second measurement varies primarily only with the at least one of the presence and concentration of the second component to develop an indication of the at least one of the presence and concentration of the second component. The first and second measurements may be made sequentially or simultaneously. The method and apparatus then remove an amount representative of the indicated presence or concentration of the second component from the concentration of the first component indicated by the first measurement.

Summary of the invention

The present invention provides a method as defined in claim 1 and a system as defined in claim 5.

**BRIEF DESCRIPTION OF THE DRAWINGS**

In the drawings:

Fig. 1A illustrates test media associated with an exemplary meter system.

Fig. 1B illustrates a test meter that can be used with test media.

Fig. 1C illustrates another test meter that can be used with test media,

Fig. 2A is a top plan view of a test strip.

Fig. 2B is a cross-sectional view of the test strip of Fig. 2A, taken along line 2B-2B.

Fig. 3 depicts flow chart of a method of determining an analyte concentration.

Fig. 4A depicts a plurality of calibration curves on a graph of current versus glucose concentration.

Fig. 4B depicts a plurality of calibration curves on a graph of current versus glucose concentration.

Fig. 4C depicts two line-plots.

Fig. 5 depicts a plurality of current decay curves on a graph of current versus time.

**DESCRIPTION OF THE EMBODIMENTS**

A method of determining an analyte concentration is described.

In the health care field, people such as diabetics need to routinely monitor analyte levels of their bodily fluids using biosensors. A number of systems are available that allow people to test a blood to conveniently monitor the level of glucose.

Such systems can include a meter configured to determine the analyte concentration and/or display representative information to a user. In addition, such metering systems can incorporate disposable test strips configured for single-use testing of a fluid sample.

While such metering systems have been widely adopted, some are susceptible to inaccurate readings resulting from analyzing fluids of differing properties. For example, blood glucose monitoring using electrochemical techniques can be highly dependent upon hematocrit. The present method reduces unwanted influences by measuring one or more current values associated with one or more time-segments. Various mathematical techniques are then used to solve for glucose concentration and hematocrit.

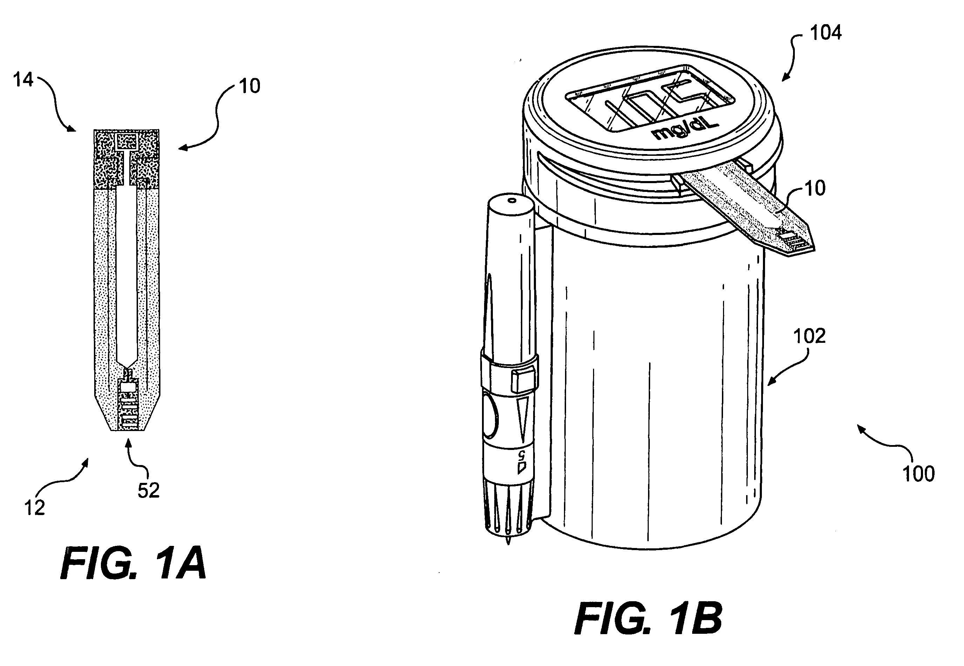

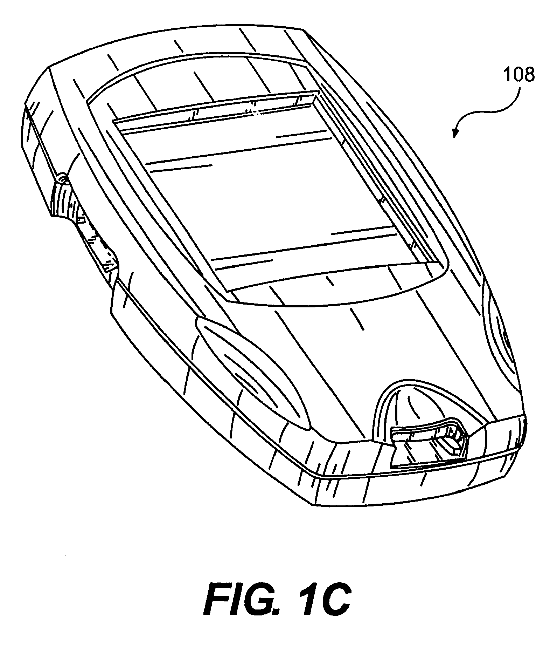

Fig. 1A illustrates a diagnostic test strip 10 that may be used with a suitable test meter 100, 108, as shown in Figs. 1B and 1C, configured to detect, and/or measure the concentration of one or more analytes present in a sample solution applied to test strip 10. As shown in Fig. 1A, test strip 10 can be generally planar and elongated in design. However, test strip 10 may be provided in any suitable form including, for example, ribbons, tubes, tabs, discs, or any other suitable form. Furthermore, test strip 10 can be configured for use with a variety of suitable testing modalities, including electrochemical tests, photochemical tests, electro-chemiluminescent tests, and/or any other suitable testing modality.

Test strip 10 can be in the form of a generally flat strip that extends from a proximal end 12 to a distal end 14. For purposes of this disclosure, "distal" refers to the portion of test strip 10 further from the fluid source (i.e. closer to the meter) during normal use, and "proximal" refers to the portion closer to the fluid source (e.g. a finger tip with a drop of blood for a glucose test strip) during normal use. Proximal end 12 of test strip 10 may include a sample chamber 52 configured to receive a fluid sample, such as, for example, a blood sample. Sample chamber 52 and test strip 10 of the present specification can be formed using materials and methods described in commonly owned U.S. Patent No. 6,743,635.

Test strip 10 can be any convenient size. For example, test strip 10 can measure approximately 35 mm long (i.e., from proximal end 12 to distal end 14) and approximately 9 mm wide. Proximal end 12 can be narrower than distal end 14 in order to assist the user in locating the opening where the blood sample is to be applied. Further, test meter 100, 108 can be configured to operate with, and dimensioned to receive, test strip 10.

Test meter 100, 108 may be selected from a variety of suitable test meter types. For example, as shown in Fig. 1B, test meter 100 includes a vial 102 configured to store one or more test strips 10. The operative components of test meter 100 may be contained in a meter cap 104. Meter cap 104 may contain electrical meter components, can be packaged with test meter 100, and can be configured to close and/or seal vial 102. Alternatively, test meter 108 can include a monitor unit separated from storage vial, as shown in Fig. 1C. In some embodiments, meter 100 can include one or more circuits, processors, or other electrical components configured to perform one or more steps of the disclosed method of determining an analyte concentration. Any suitable test meter may be selected to provide a diagnostic test using test strip 10.

Test Strip Configuration

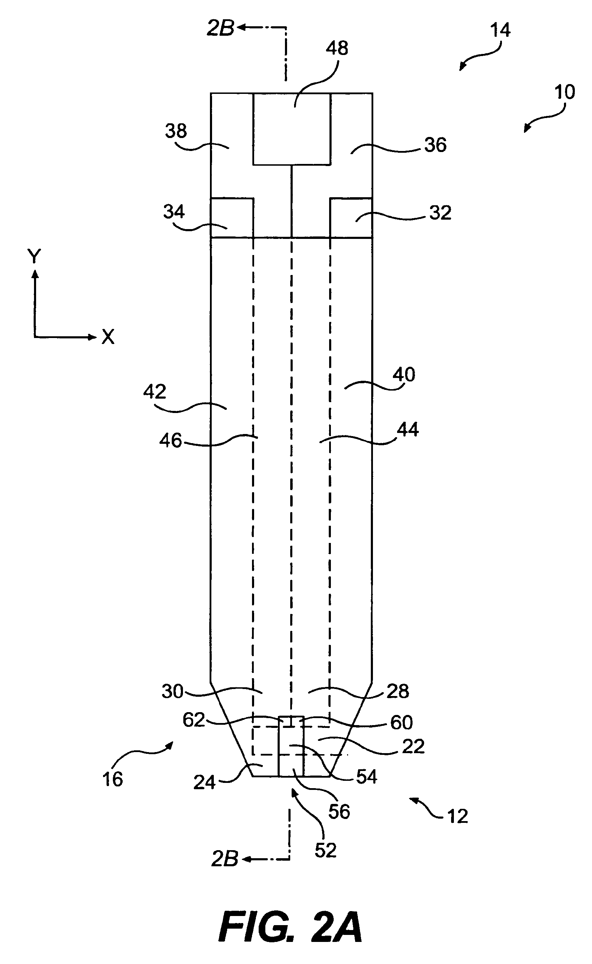

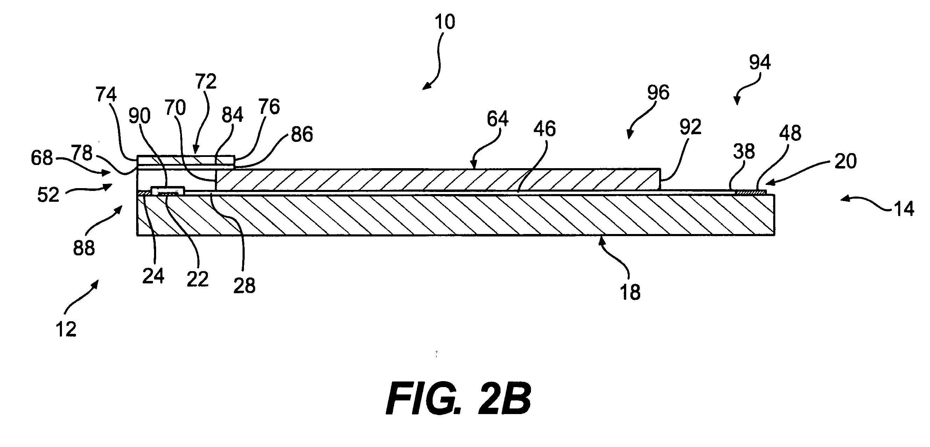

FIGS. 2A and 2B show a test strip 10 including a generally layered construction. Working upwardly from the bottom layer, test strip 10 can include a base layer 18 extending along the entire length of test strip 10. Base layer 18 can be formed from an electrically insulating material that has a thickness sufficient to provide structural support to test strip 10. For example, base layer 18 can be a polyester material about 0.35 mm thick.

A conductive layer 20 can be disposed on base layer 18. Conductive layer 20 includes a plurality of electrodes disposed on base layer 18 near proximal end 12, a plurality of electrical contacts disposed on base layer 18 near distal end 14, and a plurality of conductive regions electrically connecting the electrodes to the electrical contacts. The plurality of electrodes includes a working electrode 22, a counter electrode 24, and a pair of fill-detect electrodes 28, 30. As described in detail below, the term "working electrode" refers to an electrode at which an electrochemical oxidation and/or reduction reaction occurs, e.g., where an analyte, typically the electron mediator, is oxidized or reduced. "Counter electrode" refers to an electrode paired with working electrode 22.

The electrical contacts at distal end 14 can correspondingly include a working electrode contact 32, a proximal electrode contact 34, and fill-detect electrode contacts 36, 38. The conductive regions can include a working electrode conductive region 40, electrically connecting working electrode 22 to working electrode contact 32, a counter electrode conductive region 42, electrically connecting counter electrode 24 to counter electrode contact 36, and fill-detect electrode conductive regions 44, 46 electrically connecting fill-detect electrodes 28, 30 to fill-detect contacts 36, 38. Further, the conductive layer 20 includes an auto-on conductor 48 disposed on base layer 18 near distal end 14.

In addition to auto-on conductor 48, the present disclosure provides test strip 10 that includes electrical contacts near distal end 14 that are resistant to scratching or abrasion. Such test strips can include conductive electrical contacts formed of two or more layers of conductive and/or semi-conductive material. Further, information relating to electrical contacts that are resistant to scratching or abrasion are described in WO 2008/011247.

The next layer of test strip 10 can be a dielectric spacer layer 64 disposed on conductive layer 20. Dielectric spacer layer 64 can be composed of an electrically insulating material, such as polyester. Dielectric spacer layer 64 can be about 0.100 mm thick and covers portions of working electrode 22, counter electrode 24, fill-detect electrodes 28, 30, and conductive regions 40-46, but does not cover electrical contacts 32-38 or auto-on conductor 48. For example, dielectric spacer layer 64 can cover substantially all of conductive layer 20 thereon, from a line just proximal of contacts 32 and 34 all the way to proximal end 12, except for sample chamber 52 extending from proximal end 12. In this way, sample chamber 52 can define an exposed portion 54 of working electrode 22, an exposed portion 56 of counter electrode 24, and exposed portions 60, 62 of fill-detect electrodes 28, 30.

Sample chamber 52 can include a first opening 68 at proximal end 12 of test strip 10, and a second opening 86 for venting sample chamber 52. Further, sample chamber 52 may be dimensioned and/or configured to permit, by capillary action, a blood sample to enter through first opening 68 and remain within sample chamber 52. For example, sample chamber 52 can be dimensioned to receive about 1 micro-liter or less. For example, first sample chamber 52 can have a length (i.e., from proximal end 12 to distal end 70) of 3.56 mm (0.140 inches), a width of 1.52 mm (0.060 inches), and a height (which can be substantially defined by the thickness of dielectric spacer layer 64) of 0.13 mm (0.005 inches) Other dimensions could be used, however.

A cover 72, having a proximal end 74 and a distal end 76, can be attached to dielectric spacer layer 64 via an adhesive layer 78. Cover 72 can be composed of an electrically insulating material, such as polyester, and can have a thickness of about 0.1 mm. Additionally, the cover 72 can be transparent. Adhesive layer 78 can include a polyacrylic or other adhesive and have a thickness of about 0.013 mm. A break 84 in adhesive layer 78 can extend from distal end 70 of first sample chamber 52 to an opening 86, wherein opening 86 can be configured to vent sample chamber 52 to permit a fluid sample to flow into sample chamber 52. Alternatively, cover 72 can include a hole (not shown) configured to vent sample chamber 52. It is also contemplated that various materials, surface coatings (e.g. hydrophilic and/or hydrophobic), or other structure protrusions and/or indentations at proximal end 12 may be used to form a suitable sample reservoir.

As shown in FIG. 2B, a reagent layer 90 can be disposed in sample chamber 52, and it can include one or more chemical constituents to enable the level of glucose in the blood sample to be determined electrochemically. Reagent layer 90 may include an enzyme specific for glucose, such as glucose oxidase or glucose dehydrogenase, and a mediator, such as potassium ferricyanide or ruthenium hexamine.
Other reagents and/or other mediators can be used to facilitate detection of glucose in blood. In addition, reagent layer 90 may include other components, buffering materials (e.g., potassium phosphate), polymeric binders (e.g., hydroxypropyl-methyl-cellulose, sodium alginate, microcrystalline cellulose, polyethylene oxide, hydroxyethylcellulose, and/or polyvinyl alcohol), and surfactants (e.g., Triton X-100 or Surfynol 485). For example, an exemplary formulation contains 50 - 250 mM potassium phosphate at pH 6.75 - 7.50, 150 - 190 mM ruthenium hexamine, 3500 - 5000 U/mL PQQ-dependent glucose dehydrogenase, 0.5 - 2.0% polyethylene oxide, 0.025 - 0.20% NATROSOL 250M (hydroxyethylcellulose), 0.675 - 2.5% Avicel (microcrystalline cellulose), 0.05 - 0.25% TRITON-X (surfactant) and 2.5 - 5.0% trehalose.
Various constituents may be added to reagent layer 90 to at least partially reduce unwanted bias of an analyte measurement. For example, various polymers, molecules, and/or compounds may be added to reagent layer 90 to reduce cell migration and hence may increase the accuracy of a measurement based on an electrochemical reaction. Also, one or more conductive components may be coated with a surface layer (not shown) to at least partially restrict cell migration onto the one or more conductive components. These and other techniques known in the art may be used to reduce unwanted signal bias.

Although FIGS. 2A and 2B illustrate an illustrative example of test strip 10, other configurations, chemical compositions and electrode arrangements could be used. For example, fill-detect electrode 30 can function with working electrode 22 to perform a fill-detect feature, as previously described. Other configurations of electrodes on test strip 10 are possible, such as, for example, a single fill-detect electrode, multiple fill-detect electrodes aligned in the y-axis (as opposed to the x-axis as shown in Fig. 2A), and/or multiple working electrodes. Working electrode 22 and counter electrode 24 can be spaced further apart. For example, this electrode pair may be spaced at a distance of 500 $\mu$m to 1000 $\mu$m such that a two-pulse measurement obtained from the electrode pair can be optimized for correction of the influence of hematocrit.

Test Strip and Meter Operation

As previously described, test strip 10 can be configured for placement within meter 100, or similar device, configured to determine the concentration of an analyte contained in a solution in contact with test strip 10.

Meter 100 can include electrical components, circuitry, and/or processors configured to perform various operations to determine the glucose concentration of a blood sample. The present invention permits determination of blood glucose levels generally unaffected by hematocrit levels.

In operation, the battery-powered meter 100 may stay in a low-power sleep mode when not in use. When test strip 10 is inserted into meter 100, one or more electrical contacts at distal end 14 of test strip 10 could form electrical connections with one or more corresponding electrical contacts in meter 100. These electrical contacts may bridge electrical contacts in meter 100, causing a current to flow through a portion of the electrical contacts. Such a current flow can cause meter 100 to "wake-up" and enter an active mode.

Meter 100 can read encoded information provided by the electrical contacts at distal end 14. Specifically, the electrical contacts can be configured to store information, as described in WO 2008/011247. In particular, an individual test strip 10 can include an embedded code containing data associated with a lot of test strips, or data particular to that individual strip. The embedded information can represent data readable by meter 100. For example, a microprocessor associated with meter 100 could access and utilize a specific set of stored calibration data specific to an individual test strip 10 and/or a manufactured lot test strips 10. Individual test strips 10 may be calibrated using standard solutions, and associated calibration data could be applied to test strips 10 of the same or similar lots of manufactured test strips 10.
"Lot specific" calibration information can be encoded on a code chip accompanying a vial of strips, or coded directly onto one or more test strips 10 manufactured in a common lot of test strips. Lot calibration can include any suitable process for calibrating test strip 10 and/or meter 100. For example, calibration can include applying at the factory a standard solution to one or more test strips 10 from a manufacturing lot, wherein the standard solution can be a solution of known glucose concentration, hematocrit, temperature, or any other appropriate parameter associated with the solution. Following application of the standard solution, one or more pulses can be applied to test strip 10, as described below. Calibration data may then be determined by correlating various measurements to be determined by the meter 100 during use by the patient with one or more parameters associated with the standard solution. For example, a measured current may be correlated with a glucose concentration, or a voltage correlated with hematocrit. Such calibration data, that can vary from lot to lot with the performance of the test strips, may then be stored on test strip 10 and/or meter 100, and used to determine analyte concentration of an analyte sample, as described below.

Test strip 10 can be tested at any suitable stage during a manufacturing process. Also, a test card (not shown) could be tested during any suitable stage of a manufacturing process, as described in US 2007/0040567. Such testing of test strip 10 and/or the test card can permit determination and/or encoding of calibration data at any suitable stage during a manufacturing process. For example, calibration data can be encoded during the manufacturing process.

In operation meter 100 can be configured to identify a particular test to be performed or provide a confirmation of proper operating status. Also, calibration data pertaining to the strip lot, for either the analyte test or other suitable test, could be otherwise encoded or represented, as described above. For example, meter 100 can identify the inserted strip as either test strip 10 or a check strip (not shown) based on the particular code information.

If meter 100 detects test strip 10, it may perform a test strip sequence. The test strip sequence may confirm proper functioning of one or more components of test strip 10. For example, meter 100 could validate the function of working electrode 22, counter electrode 24, and, if included, the fill-detect electrodes, by confirming that there are no low-impedance paths between any of these electrodes. If the electrodes are valid, meter 100 could provide an indication to the user that a sample may be applied to test strip 10.

If meter 100 detects a check strip, it may perform a check strip sequence. The system may also include a check strip configured to confirm that the instrument is electrically calibrated and functioning properly. The user may insert the check strip into meter 100. Meter 100 may then receive a signal from the check strip to determine if meter 100 is operating within an acceptable range. Test strip 10 and/or meter 100 may be configured to perform a calibration process based on a standard solution, also termed a control solution. The control solution may be used to periodically test one or more functions of meter 100. For example, a control solution may include a solution of known electrical properties, and an electrical measurement of the solution may be performed by meter 100. Upon detecting the presence of a control solution, meter 100 can perform an operational check of test strip 10 functionality to verify measurement integrity. For example, the read-out of meter 100 may be compared to a known glucose value of the solution to confirm that meter 100 is functioning to an appropriate accuracy. In addition, any data associated with a measurement of a control solution may be processed, stored or displayed using meter 100 differently to any data associated with a glucose measurement. Such different treatment of data associated with the control solution may permit meter 100, or user, to distinguish a glucose measurement, or may permit exclusion of any control measurements when conducting any mathematical analysis of glucose measurements.

Analyte Concentration Determination

Meter 100 can be configured to apply a signal to test strip 10 to determine a concentration of an analyte contained in a solution contacting test strip 10. In some cases, the signal can be applied following a determination that sample chamber 52 of test strip 10 contains a sufficient quantity of fluid sample. To determine the presence of sufficient fluid, meter 100 can apply a detect voltage between any suitably configured electrodes, such as, for example, fill-detect electrodes. The detect voltage can detect the presence of sufficient quantity of blood within sample chamber 52 by detecting a current flow between the fill-detect electrodes. In addition, to determine that the fluid sample has traversed reagent layer 90 and mixed with the chemical constituents in reagent layer 90, meter 100 may apply a fill-detect voltage to the one or more fill-detect electrodes and measure any resulting current. If the resulting current reaches a sufficient level within a predetermined period of time, meter 100 can indicate to a user that adequate sample is present. Meter 100 can also be programmed to wait for a predetermined period of time after initially detecting the blood sample to allow the blood sample to react with reagent layer 90. Alternatively, meter 100 can be configured to immediately begin taking readings in sequence.

Meter 100 can be configured to apply various signals to test strip 10. For example, an exemplary fluid measurement sequence could include amperometry, wherein an assay voltage is applied between working and counter electrodes 22, 24 of test strip 10. The magnitude of the assay voltage can include any suitable voltage, and could be approximately equal to the redox potential of constituents of reagent layer 90. Following application of an assay voltage, also termed potential excitation, meter 100 could be configured to measure one or more current values between working and counter electrodes 22, 24. Such a measured current can be mathematically related to the concentration of analyte in the fluid sample, such as, for example, glucose concentration in a blood sample.

For example, one or more constituents of reagent layer 90 may react with glucose present in a blood sample such that glucose concentration may be determined using electrochemical techniques. Suitable enzymes of reagent layer 90 (e.g. glucose oxidase or glucose dehydrogenase) could react with blood glucose. Glucose could be oxidized to form gluconic acid, which may in turn reduce a suitable mediator, such as, for example, potassium ferricyanide or ruthenium hexamine. Voltage applied to working electrode 22 may oxidize the ferrocyanide to form ferricyanide, and generating a current proportional to the glucose concentration of the blood sample.

As previously discussed, the hematocrit level (i.e. the percentage of blood occupied by red blood cells) of blood can erroneously affect a measurement of analyte concentration. In order to reduce inaccuracies associated with a determination of analyte concentration, the present invention uses multiple sets of calibration data. Such calibration data can reduce errors due to hematocrit that may adversely affect analyte concentration determination, thus permitting more precise determinations of analyte concentration over a wider range of analyte concentrations than can be achieved using traditional techniques. The influence of hematocrit that may adversely affect determination of blood glucose concentration can be reduced using techniques that employ multiple calibration data. The precision and/or accuracy of monitoring blood glucose levels using biosensors may be improved using the method or systems of the present disclosure. In particular, a set of calibration data can include one or more of a calibration curve, a lookup table, a data array, or a mathematical equation.

One exemplary embodiment is directed to a method that includes calculating an analyte concentration based on two measured currents and two sets of calibration curves. Each set of calibration curves can include a plurality of calibration curves that may be associated with a time-segment, as explained in detail below. For example, at a time during the first time-segment, a first analyte concentration can be calculated using two or more calibration curves associated with the first time-segment. If the calculated first analyte concentration is within a pre-determined concentration range associated with the first time-segment, current measurement can stop, analyte concentration can be determined and the result displayed. If the calculated analyte concentration is outside the pre-determined range, the current measurement can continue to a time during a second time-segment. At that time, a second analyte concentration can be calculated using parameters associated with a second time-segment. If the second analyte concentration is about equal to the first analyte concentration, current measurement can stop, a final analyte concentration can be determined and the result displayed. Otherwise, the method can continue to determine a final analyte concentration based on a plurality of first analyte concentrations and a plurality of second analyte concentrations. As explained in detail below, various mathematical algorithms can be used to determine a final analyte concentration. For example, a first plurality of analyte concentrations may provide an initial glucose concentration and a second plurality of analyte concentrations may provide a different glucose concentration based on a presumed hematocrit level. The difference in calculated glucose concentration could be used, along with two or more calibration curves, to refine the calculation using interpolative and/or extrapolative techniques. Preferably, the calculation may be refined using iterative techniques to converge to a final analyte concentration.

Analyte concentration may be determined by first applying a potential excitation to a fluid sample in contact with test strip 10. An applied potential can include any suitable voltage signal, such as, for example, signals with constant, variable, or pulse-train voltages. Meter 100 may then measure a current value associated with the potential excitation, as previously described.

A a current may be measured at one or more time-points. A time-point can include a discrete time following application of a potential excitation. For example, a first current can be measured at a first time-point of 0.1 seconds, and a second current can be measured at a second time-point 0.2 seconds. The first time-point can occur 0.1 seconds following the application of the potential, and the second time-point can occur 0.2 seconds following the application of the potential. In some cases, a plurality of current values can be measured at any number of time-points following the application of a potential excitation.

Time-points can include irregular or regular time periods, and can include any suitable sampling rate. For example, the sampling rate could be 10 Hz, or 0.1, 1, 100, or 1000 Hz. Or, time-points could be sampled at non-constant sampling rates. For example, time-points could be sampled at increasing, decreasing, or nonuniform sampling rates.

Current current values can be measured over a plurality of time-segments, wherein a time-segment can include a series of time-points or span a specific time period. For example, a first time-segment could include any number of time-points up to about six seconds, and a second time-segment could include any number of time-points following about six seconds.

A first time-segment could include a time period less than about six seconds, and a second time-segment could include a time period greater than about six seconds. A first time-segment could be less than about twenty seconds, and a second time-segment could be any time period following the first time-period.

The time period of any time-segment could vary depending upon various factors, including configuration of test strip 10, meter 100, bodily sample analyzed, or reagents of test strip 10. For example, a first time-segment could span a time from about zero to about two to ten seconds following application of a potential excitation. Further, the end of a time-segment may coincide with the beginning of the next time-segment, or a prior and later time segment may not coincide. For example, a first time-segment may span the time period from about zero to ten seconds and a second time-segment may span the time period from about two to fourteen seconds.

Current values measured in the first time-segment could include one or more currents measured at 0.1, 0.2, 1.6, 2.0, 3.4, or 5.99 seconds, or at any other suitable times. Current values measured in the second time-segment could include one or more currents measured at 6.2, 6.63, 7.0, or 9.97 seconds, or at any other suitable times. These one or more current values measured within different time-segments can then be used to determine analyte concentration based on calibration information associated with the different time-segments. For example, a low analyte concentration can be determined during an early time-segment, such as a first time-segment, based on calibration data associated with the low analyte concentration. Conversely, a high analyte concentration can be determined during a later time-segment, such as a second time-segment, based on calibration data associated with the higher analyte concentration. Calibration data can be described by a plurality of calibration curves, wherein each time-segment can be associated with a plurality of calibration curves. For example, a first time-segment can be associated with a plurality of first calibration curves. Each first calibration curve can be associated with a first time-segment and hematocrit.

As explained in detail below, a first set of calibration data can include a plurality of calibration curves representing data associated with blood samples of different levels of hematocrit. Specifically, one curve may be associated with a low level of hematocrit, another curve with a medium level of hematocrit, and a third curve with a high level of hematocrit. In some instances only two calibration curves may be used. These plurality of calibration curves may be associated with a first time-segment, while another set of calibration data may be associated with a second time-segment.

The plurality of calibration curves associated with a first time-segment can be used to determine a plurality of first analyte concentrations. For example, a plurality of calibration curves representing different levels of hematocrit may be used to determine a plurality of analyte concentrations associated with these different levels of hematocrit. Further, a plurality of calibration curves associated with a second time-segment can be used to determine a plurality of second analyte concentrations. Two, three, four, or more, calibration curves can be used to determine analyte concentration, wherein each calibration curve can be associated with a corresponding time-segment. Two, three, four, or more, time-segments may be used by the following method.

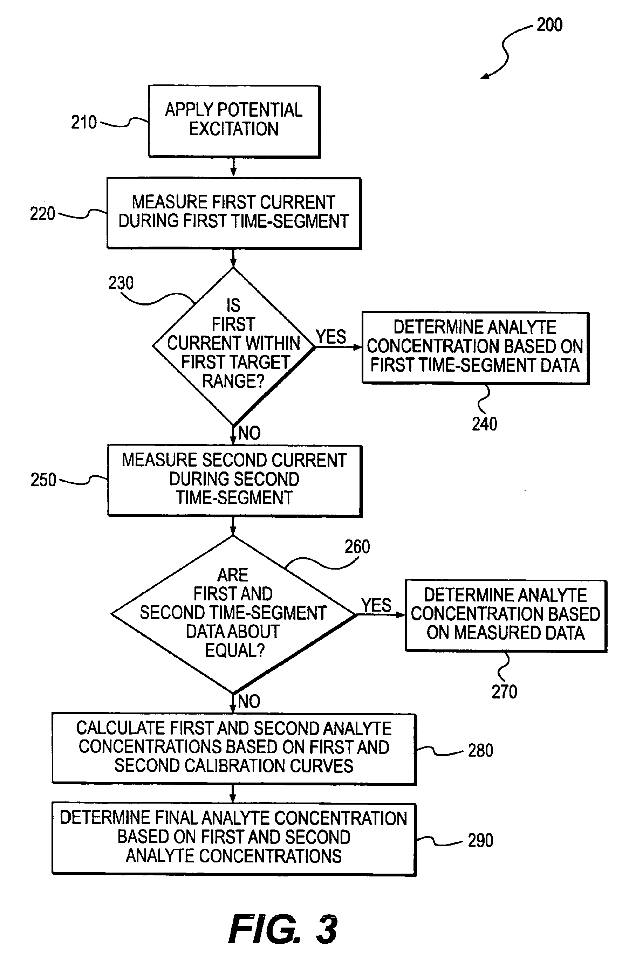

Fig. 3 depicts a method 200 for determining analyte concentration, according to. Initially, a potential excitation can be applied to a fluid sample containing an analyte (Step 210). For example, the fluid sample may be contained within test strip 10. As described above, meter 100 can be configured to supply the potential excitation across electrodes 22, 24 within test strip 10. Meter 100 could also be configured to measure a current during one or more time-segments following application of the potential excitation. Meter 100 may then determine an analyte concentration, such as, for example, a blood glucose level, based on multiple sets of calibration data associated with the time-segments. Other test strips, meters, or analyte monitoring systems could also be configured to incorporate method 200.

Following application of a potential excitation, a first current may be measured, wherein the first current can be measured during a first time-segment (Step 220). As described above, a first time-segment can include a time period of less than about two to ten seconds.

Next, the first current may be compared with a first target-range (Step 230). Specifically, the first measured current can be compared with a first target-range of current values associated with a first range of analyte concentrations. If the measured current is within the first target-range, then the analyte concentration of the fluid sample should also be within the corresponding first range of analyte concentrations. For example, a first range of glucose concentrations may be less than about 50, 100, or 150 mg/dL. Each different range may also be associated with a corresponding target-range of current values. If the measured current value falls within any of these target-ranges, then a glucose concentration within a first range of 50, 900, or 150 mg/dL can be presumed. Specifically, a final analyte concentration may be determined based on the data associated with the first time-segment (Step 240). This data may include the first measured current value obtained by Step 220, and various other data associated with the first time-segment.

To illustrate by way of an example, the first target-range may include a maximum glucose concentration of 50 mg/dL. Generally, lower analyte concentrations are associated with earlier time-segments, and higher analyte concentrations are associated with later time-segments. If the first measured current is about equal to or less than 50 mg/dL, method 200 may determine an analyte concentration based on the data associated with the first time-segment. Such a determination may include the use of one or more sets of calibration data associated with the first time-segment, as explained below. Various target-ranges, calibration data, time-segments, and other parameters can be determined empirically and can vary depending on test strip and meter design, manufacturing conditions, fluid type, operating conditions, etc.

A suitable range of analyte concentrations may be encompassed by two or more target-ranges. For example, a first target-range could be associated with a glucose concentration of about 10 to about 50 mg/dL, and a second target-range could be associated with a glucose concentration above about 50 mg/dL. The limits of various target-ranges may overlap, and a third, fourth, or any other number of target-ranges could also be used.

Various calibration data may be associated with a time-segment, whereby calibration data could include any suitable information associated with a time-segment. For example, a calibration curve may represent calibration data corresponding to an analyte concentration between a lower and an upper analyte concentration. Such an association can permit use of concentration-dependent calibration information. For example, one set of calibration information may exist for low analyte concentrations while another set of calibration information may exist for high analyte concentrations. Two, three, four or more different sets of calibration data could be used to determine analyte concentration, whereby the different sets of calibration data each correspond to different ranges of analyte concentrations.

Each set of calibration data could include empirical data associated with a range of analyte concentrations, termed "calibration-range." The calibration-range may be different to the corresponding target-range. For example, a first target-range may be associated with a glucose concentration of about 10 to 50 mg/dL, while a first calibration-range may be associated with a glucose concentration of about 0 to 75 mg/dL. A calibration-range larger than the corresponding target-range can permit greater accuracy in determining the corresponding calibration data as a greater range of empirical data could be used to determine the calibration data. Also, as explained in detail below, adjacent calibration-ranges can overlap and provide additional data for determining a set of calibration data. Two calibration-ranges can be used to determine two sets of calibration data. For example, a first calibration-range can be associated with a glucose concentration of about 0 to about 75 mg/dL, and a second calibration-range can be associated with a glucose concentration of above about 50 mg/dL. The second calibration-range can be associated with a glucose concentration of about 30 mg/dL to about 240 mg/dL, and a third calibration-range can be associated with a glucose concentration of about 75 to about 600 mg/dL. A fourth calibration-range could be used. For example, a third time-segment could be triggered at about nine seconds, a fourth time-segment at about fourteen seconds, a third target-range could be associated with a glucose concentration of about 350 mg/dL, and a fourth target-range with a glucose concentration of about 600 mg/dL. Also, each particular set of calibration data can be associated with a corresponding calibration-range such that a first set of calibration data is associated with a first calibration-range, a second set of calibration data is associated with a second calibration-range, and so forth.

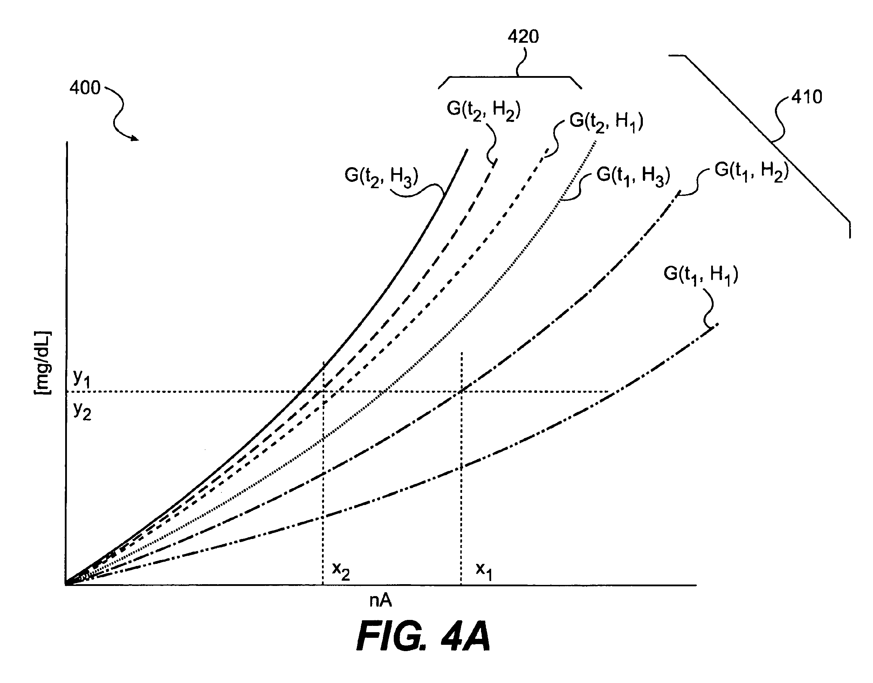

For example, Fig. 4A depicts a chart 400 representing two sets of calibration data used for determining a glucose concentration. A plurality of first calibration curves 410 can be associated with a first time-segment $(t_1)$. As illustrated, three calibration curves are shown for $t_1$, although two, four, five, or more curves could be determined or used. First set of calibration curves 410 can be associated with $t_1$, a first measured current $x_1$, or any other variable associated with a first time-segment. The first set of calibration curves can be determined using a first calibration-range of glucose concentrations, such as, for example, 0 to 75 mg/dL.

A plurality of second calibration curves 420 can be associated with a second time-segment. As previously described for first set of calibration curves 410, second set of calibration curves 420 can include two, four, five, or more curves. As shown, second set of calibration curves 420 is associated with second time-segment $t_2$, and second measured current $x_2$, although other variables could be used. A second set of calibration curves 420 can be determined using a second calibration-range of glucose concentrations, such as, for example, above about 50 mg/dL. Although not shown in Fig. 4A, a third, fourth, or other sets of calibration curves could also be determined and/or used in conjunction with method 200.

Fig. 4A shows individual calibration curves with generally curved and different slopes. Or, such curves may be generally linear, and may or may not have different slopes. Also, these various calibration curves could also be represented in any suitable data format. Such calibration data could include any suitable representation of calibration information, such as, for example, slopes, relationships, charts, tables, equations, algorithms, or data formats. Various equations could include quadratic, polynomial, data-fitted, or other mathematical descriptions. Calibration data could include strip, lot, or meter specific information, and accounts for hematocrit. Such calibration data may be encoded on strip 10 or within meter 100.

An event triggering Step 230 could include a set period of time could elapse after applying the excitation potential in Step 210. Or, once the end of a first time-segment is reached, such as four seconds, Step 230 could be triggered. Or a current reading could trigger the event. For example, Step 230 could be triggered if a measured current drops below a predefined level, such as, 3 mA. Certain values, or value ranges, of voltage, impedance, or other parameters associated with various electrochemical techniques could also be used as a triggering event.

As shown in method 200, if the first measured current is not within the first target-range, method 200 may then continue to measure a second current during a second time-segment (Step 250). Specifically, one or more current measurements can occur at a time following that of the first current measurement. For example, one or more additional current measurements could occur in a second time-segment, such as, about two seconds to ten seconds following excitation application in Step 210. Step 250 could occur as described above for Step 220, measurement of the first current during a first time-segment.

Following Step 250, data associated with the first and second time-segments can be compared. Such data can include analyte concentration, current, voltage, or any other suitable information. The comparison of first and second time-segment data can include determining if such data are about equal (Step 260). Method 200 may require such data be equal, or about equal, whereby the difference can be within an acceptable range, such as, for example, 10%, 5%, or 2% variation.

If the first and second time-segment data are about equal, the final analyte concentration can be determined based on the measured data (Step 270). This data could include the first or second time-segment data, or some combination. Such a determination could be similar to the determination described above for Step 240. By way of example, in Fig. 4A, the first and second-segment data are about equal.

Fig. 4A shows two sets of calibration data on chart 400, plotted as a series of curves on the axes of analyte concentration (mg/dL) axis and current (nA). First plurality of calibration curves 410 as shown includes three curves $G(t_1, H_1)$, $G(t_1, H_2)$, and $G(t_1, H_3)$. Alternatively, calibration curves 410 could include two, four, or more curves. Alternatively, these or other calibration data could be represented by a table, graph, or equation, and may include empirical and/or modeled data.

As shown, each calibration curve 410 represents calibration data associated with a first time $t_1$, whereby $t_1$ is a time point within the first time-segment. For example, $t_1$ could be 2, 4, or 6 seconds following application of a potential. Calibration curves 410 represent calibration data associated with hematocrit. As shown, each calibration curve 410 represents calibration data associated with three different levels of hematocrit, $H_1$, $H_2$, $H_3$. For example, $H_1$ could represent a low hematocrit level, $H_2$ could represent a physiological hematocrit level, and $H_3$ could represent a high hematocrit level. Each calibration curve could also include data associated with additional or other variables as required. Further, different calibration curves may be required for different test strips 10, or meters 100.

Chart 400 also shows second plurality of calibration curves 420 as including three curves $G(t_2, H_1)$, $G(t_2, H_2)$, and $G(t_2, H_3)$. As noted above, in other embodiments calibration curves 420 could include two, four, or more curves. As shown, each calibration curve 420 represents calibration data associated with a second time $t_2$, whereby $t_2$ is a time point within the second time-segment. For example, $t_2$ could be 6, 8, 10 or 12 seconds following application of a potential. As described previously, each calibration curve 420 represents calibration data associated with three different levels of hematocrit, $H_1$, $H_2$, $H_3$.

As outlined above, a first current $x_1$ can be measured during a first time-segment, as described in Step 220. Initially, method 200 may assume the fluid sample has a physiological hematocrit level, i.e., $H_2$. Referring to Fig. 4A, a first current $x_1$, measured at time $t_1$, and assuming $H_2$ hematocrit level, results in an analyte concentration of $y_1$. If required, a second current $x_2$ can be measured during a second time-segment, as described in Step 250.

Referring to Fig. 4A, a second current $x_2$, measured at time $t_2$, and assuming $H_2$ hematocrit level, results in an analyte concentration of $y_2$. As shown in Fig. 4A, both $y_1$ and $y_2$ are about equal. Such a result may then indicate that a final analyte concentration may be determined based on the measured data, as in Step 270. A different calculation may be required if the first and second time-segment data are not sufficiently equal or the difference between the data is not within an acceptable range.

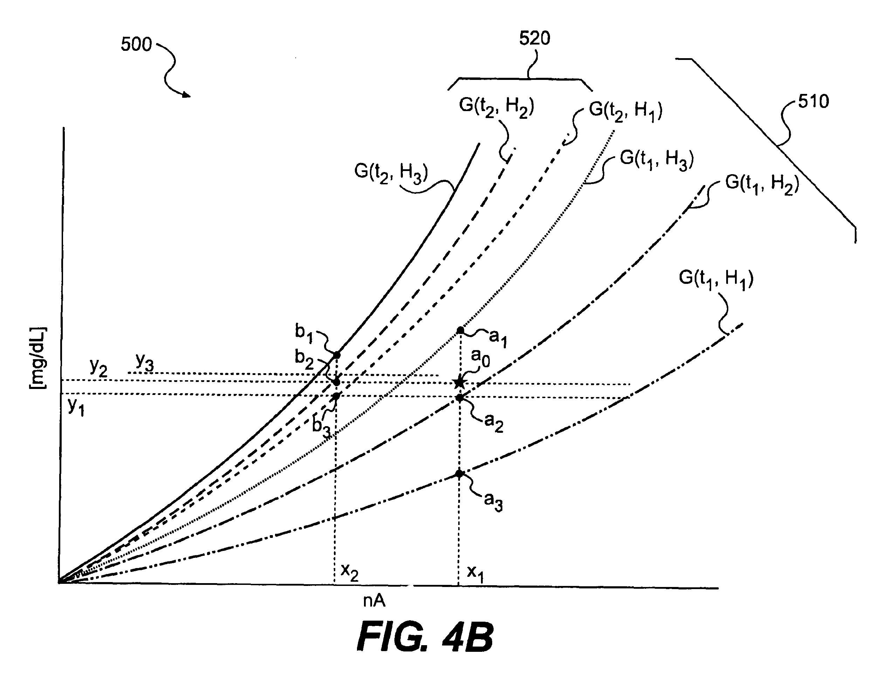

Returning to Fig. 3, following comparison of first and second time-segment data in Step 260, and determination that the data are not about equal, method 200 can then calculate first and second analyte concentrations (Step 280). These calculations can use data associated with the first and second sets of calibration data. If the first and second analyte concentrations are about equal, a determination of a final analyte concentration can be made as described above for Step 270 and as illustrated by Fig. 4A. If such analyte concentrations are not equal, or within a suitable range, then both sets of calibration data may be required to accurately determine a final analyte concentration, as shown in Fig. 4B.

Fig. 4B illustrates an exemplary embodiment similar to Fig. 4A, showing a chart 500 that includes a first plurality of calibration curves 510 and a second plurality of calibration curves 520. First current $x_1$ may include a plurality of analyte concentrations associated with first plurality of calibration curves 510. Specifically, first current $x_1$ may include analyte concentrations $a_1$, $a_2$, and $a_3$, associated with calibration curves $G(t_1, H_3)$, $G(t_1, H_2)$, and $G(t_1, H_1)$ respectively. That is, at first current $x_1$, using calibration curve $G(t_1, H_3)$ results in analyte concentration value $a_1$, while using calibration curve $G(t_1, H_1)$ results in analyte concentration value $a_3$. Similarly, second current $x_2$ may include analyte concentrations $b_1$, $b_2$, and $b_3$, associated with calibration curves $G(t_2, H_3)$, $G(t_2, H_2)$, and $G(t_2, H_1)$ respectively. As shown in Fig. 4B, three calibration curves are used, although two, four, five, or more calibration curves could also be used.

Method 200 may be used with any calibration data displaying a general convergence property. For example, here data associated with a first time-segment (data associated with $x_1$) displays convergence at a second time-segment (data associated with $x_2$). Specifically, $(b_1 - b_3)$ the difference between the upper and lower bounds of calibration data associated with $x_2$, is less than $(a_1 - a_3)$, the upper and lower bounds of calibration data associated with $x_1$. An iterative method, based on the various analyte concentration values associated with different calibration data, can be used to determine a final analyte concentration based on this convergence property, i.e., $(b_1 - b_3) < (a_1 - a_3)$.

One method of using the property of convergence will be described by way of example, although other convergence-based methods are also contemplated. Initially, an average of a set of calibrated data (e.g., a median calibration curve), could be assumed. For example, as shown in Fig. 4B, an average hematocrit value $(H_2)$ could be initially assumed and used to calculate an initial analyte concentration. At a first current $x_1$, such an initial analyte concentration is represented by $a_2$. As explained above, if the second current $x_2$ results in an analyte concentration of $b_2$, whereby $a_2$ is about equal to $b_2$, then a final analyte concentration can be determined based on either $x_1$ or $x_2$ data. However, $a_2$ and $b_2$ may not be sufficiently converged whereby the difference between $a_2$ and $b_2$ is beyond a desired degree of accuracy, such as, for example, 5%.

If the difference between the initial calibration data associated with first and second time-segments is too large, then various algorithmic techniques can be used to optimize the determination of a final analyte concentration (Step 290). For example, assume a first estimate of analyte concentration is $b_2$, and $(a_2 - b_2)$ is outside an acceptable value. As shown in Fig. 4B, a revised hematocrit value may be calculated based on $a_0$, the analyte concentration corresponding to $b_2$ but associated with first current $x_1$. The analyte concentration associated with

first current $x_1$ may be modified by interpolating between $a_1$, $a_2$, or $a_3$. As shown in Fig. 4B, $a_0$ is between $a_1$ and $a_2$. A revised hematocrit value (HCT) could be determined based on the following equation:

$$\frac{(HCT - H_2)}{(H_1 - H_2)} = \frac{(a_0 - a_2)}{(a_1 - a_2)}$$

The equation could be solved for HCT as the other variables are all known.

Following determination of the revised hematocrit value based on the calibration data associated with first current $x_1$, the analyte concentration $y_2$ could then be revised. For example, the revised value $y_3$ could be determined based on the following equation:

$$\frac{(y_3 - y_2)}{(b_1 - b_2)} = \frac{(a_0 - a_2)}{(a_1 - a_2)}$$

The equation could be solved for $y_3$ as the other variables are all known. Further, this process could be repeated as necessary to revise one or both of the values of analyte concentration and hematocrit, or any other calibration variable.

Various algorithms could be used to solve for one or more variables associated with calibration data. For example, the techniques described above could be used in combination with iterative methods to refine a calculation to within a desired accuracy range. Other optimization techniques are also known in the art, such as, for example, extrapolation or interpolation using linear or non-linear methods. Extrapolation methods could be used to determine appropriate calibration data beyond a given data range. Interpolative methods may cap calibration data within upper or lower values, or naturally extend (extrapolate) data depending upon variance or bias statistics associated with actual data. For example, as explained above, the analyte concentration may be modified by extrapolating beyond $a_1$, $a_2$, or $a_3$.

The method described above can use two or more sets of calibration data, whereby each set of calibration data can be associated with a different time-segment, to solve for two or more unknown variables. A set of calibration data can include a lookup table, array, mathematical equation, or any other suitable data structure configured to represent calibration data, and various multiple types of calibration data could be used with method 200. In particular, method 200 can use at least two sets of calibration curves, wherein each plurality of calibration curves can be associated with a different time-segment. For example, method 200 could use three sets of calibration data associated with any three suitably defined time-segments, such as, about four, seven, and ten seconds. Each time-segment may include specifically derived calibration data associated with that particular time-segment.

Method 200 can be used to solve for two unknown variables, namely hematocrit and analyte concentration as outline above. A third variable, such as, temperature, may also be included in a set of calibration data, wherein at low hematocrit levels an analyte concentration may be relatively less temperature dependent than high hematocrit levels which may be relatively more temperature dependent. Additional calibration data and/or time-segments may be used to solve for a temperature variable using the methods described herein.

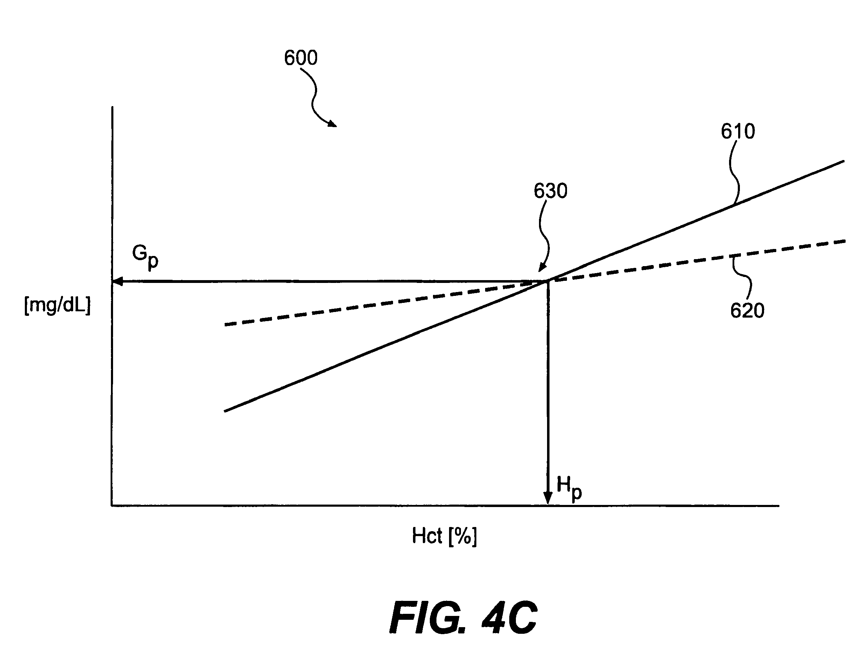

Another mathematical method that may be employed with method 200 uses two or more line-plots generated from data associated with two or more time-segments. As described previously, multiple calibration curves may be generated for multiple time-segments, as shown in Fig. 4A. Then, data associated with each time-segment may be determined based on one or more measured current values. As shown in Fig. 4B, current value $x_1$ may include the associated data $a_1$, $a_2$, and $a_3$, while current value $x_2$ may include the associated data $b_1$, $b_2$, and $b_3$. These two sets of associated data may then be plotted to form two line-plots, as shown in Fig. 4C.

Fig. 4C illustrates an exemplary embodiment showing a chart 600, that includes a first line-plot 610 and a second line-plot 620. First line-plot 610 may include $a_1$, $a_2$, $a_3$, or other data associated with $x_1$, while second line-plot 620 may include $b_1$, $b_2$, $b_3$, or other data associated with $x_2$. The resulting line-plots may be plotted with respect to two unknown variables, such as, for example, glucose concentration (mg/dL) and hematocrit (%), as shown in Fig. 4C. These resulting line-plots may be generally linear, curved, or irregular in form, and generally intersect about a point 630. Point 630 may be generally defined if the two line-plots are irregular, or if the line-plots show general intersection about a limited range of values. Consequently, point 630 may encompass a limited range of values of one or more unknown variables. Based on point 630, a predicted glucose concentration (Gp) and a predicted hematocrit (Hp) can be readily determined. As point 630 may encompass a range of values, so to may Gp or Hp encompass a limited range of values.

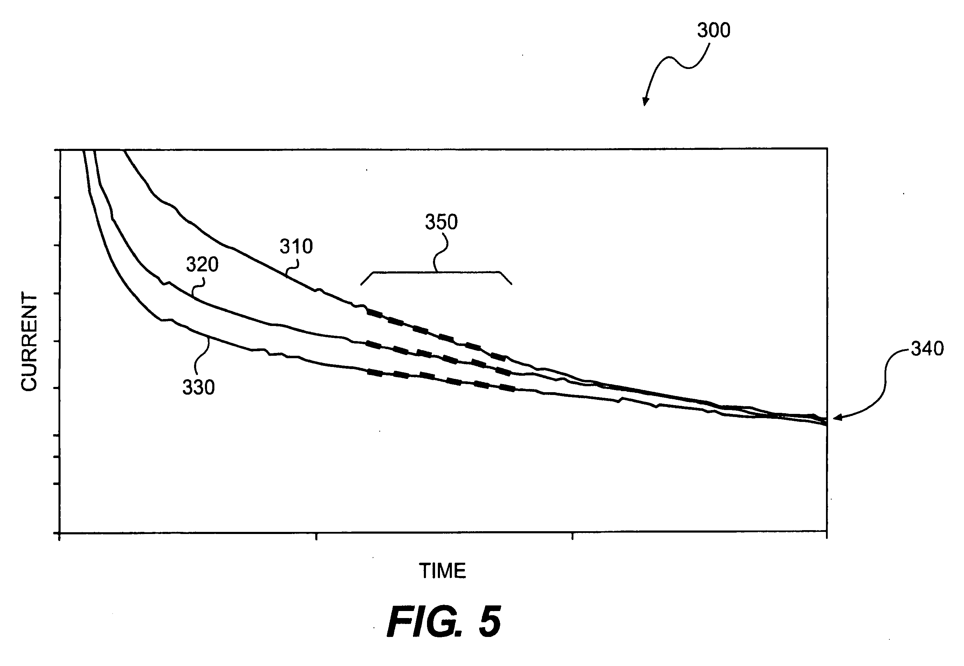

Fig. 5 depicts a chart 300 of three different fluid samples showing current decay curves over time after the application of a potential excitation. While the three samples depicted contain similar glucose concentrations, all three samples contain different amounts of red blood cells, i.e. different hematocrit values. The sample with the lowest hematocrit value is depicted by a line 310, and has the steepest slope over an indicated dashed range 350. In contrast, the sample with the highest hematocrit value is depicted by a line 330, and has the flattest slope over indicated range 350. A line 320 represents a sample with an intermediate hematocrit value. As shown, all three lines 310, 320, 330 approximately converge toward a generally common current value at a future time-point, as depicted by a region 340.

Glucose concentration can affect the shape of a current decay curve. For example, different hematocrit values can affect the convergence of current decay curves. In particular, samples containing lower glucose concentrations may reach a generally common current value faster than samples containing higher glucose concentrations. As such, current decay curves representing samples containing lower glucose concentrations may converge in a shorter time period than samples containing higher glucose concentrations. Determining a wide range of glucose concentrations could require two or more time-segments, and calibration data associated with different time segments may be different.

## Claims

1. A method (200) for analyzing an analyte, the steps comprising:

    applying (210) a potential excitation to a fluid sample containing an analyte;
    measuring (220) a first current during a first time-segment following application of the potential excitation, **characterized by**
    measuring (250) a second current during a second time-segment following application of the potential excitation;
    calculating (280) a plurality of first concentrations of the analyte based on the first measured current and a first set of calibration data associated with the first time-segment;
    calculating (280) a plurality of second concentrations of the analyte based on the second measured current and a second set of calibration data associated with the second time-segment; and
    determining (290) a final concentration of the analyte based on at least one of the first concentrations of the analyte and at least one of the second concentrations of the analyte,
    wherein the first and second sets of calibration data are associated with different levels of hematocrit.

2. The method of claim 1, wherein the first time-segment is less than about two to ten seconds, and the second time-segment is more than about two to ten seconds.

3. The method of claim 1, further comprising:

    measuring a third current during a third time-segment following application of the potential excitation;
    calculating a plurality of third concentrations of the analyte based on the third measured current and a third set of calibration data associated with the third time-segment; and
determining a final concentration of the analyte based on at least one of the first and second concentrations of the analyte and at least one of the third concentrations of the analyte.

4. The method of claim 1, wherein the fluid sample includes an enzyme of at least one of glucose oxidase and glucose dehydrogenase and a mediator of at least one of potassium ferricyanide and ruthenium hexamine.

5. A system (100) for analyzing an analyte in a fluid sample, comprising:

    a set of electrodes (22, 24) configured to apply a potential excitation to a fluid sample containing an analyte;
    a processor configured to:

        measure (220) a first current during a first time-segment following application of the potential excitation **characterized in that** the processor is further configured to:

            measure (250) a second current during a second time-segment following application of the potential excitation;
            calculate (280) a plurality of first concentrations of the analyte based on the first measured current and a plurality of first calibration curves associated with the first time-segment;
            calculate (280) a plurality of second concentrations of the analyte based on the second measured current and a plurality of second calibration curves associated with the second time-segment; and
            determine (290) a final concentration of the analyte based on at least one of the first concentrations of the analyte and at least one of the second concentrations of the analyte,
            wherein the plurality of first and second calibration curves are associated with different levels of hematocrit.

6. The system of claim 5, wherein the system is further configured to a display a value representative of the final concentration of the analyte.

7. The system of claim 5, further comprising a processor configured to:

    measure a third current during a third time-segment following application of the potential excitation;
calculate a plurality of third concentrations of the analyte based on the third measured current and a plurality of third calibration curves associated with the third time-segment; and
determine a final concentration of the analyte based on at least one of the first and second concentrations of the analyte and at least one of the third concentrations of the analyte.

8. The system of claim 5, wherein the analyte is glucose and the fluid sample includes blood.

9. The system of claim 5, wherein the fluid sample includes an enzyme of at least one of glucose oxidase and glucose dehydrogenase and a mediator of at least one of potassium ferricyanide and ruthenium hexamine.

10. The system of claim 5, wherein the set of electrodes are contained within in a test strip (10).

11. The system of claim 5, wherein the processor is contained within a meter.

**Patentansprüche**

1. Verfahren (200) zur Analyse eines Analyten, die folgenden Schritte umfassend:

Anwendet (210) einer Potentialanregung auf eine einen Analyten beinhaltende Fluidprobe;
Messen (220) eines ersten Stroms während eines ersten Zeitsegments,
welches auf die Abwendung der Potentialanregung folgt, **gekennzeichnet durch**,
Messen (250) eines zweiten Stroms während eines zweiten Zeitsegments, welches auf die Abwendung der Potentialanregung folgt;
Berechnen (280) einer Mehrzahl erster Konzentrationen des Analyten basierend auf dem ersten gemessenen Strom und einem ersten Satz Kalibrierdaten, welche mit dem ersten Zeitsegment verbunden sind;
Berechnen (280) einer Mehrzahl zweiter Konzentrationen des Analyten basierend auf dem zweiten gemessenen Strom und einem zweiten Satz Kalibrierdaten, welche mit dem zweiten Zeitsegment verbunden sind; und
Bestimmen (290) einer Endkonzentration des Analyten basierend zumindest auf einer der ersten Konzentrationen des Analyten oder einer der zweiten Konzentrationen des Analyten,
wobei der erste und zweite Satz Kalibrierdaten mit unterschiedlichen Hämatokrit-Spiegeln verbunden sind.

2. Verfahren nach Anspruch 1, wobei das erste Zeitsegment kleiner als etwa zwei bis zehn Sekunden ist, und das zweite Zeitsegment größer als etwa zwei bis zehn Sekunden ist.

3. Verfahren nach Anspruch 1, weiter umfassend:

Messen eines dritten Stroms während eines dritten Zeitsegments, welches auf die Anwendung der Potentialanregung folgt;
Berechnen einer Mehrzahl dritter Konzentrationen des Analyten,
basierend auf dem dritten gemessenen Strom und einem dritten Satz Kalibrierdaten, welche mit dem dritten Zeitsegment verbunden sind; und
Bestimmen einer Endkonzentration des Analyten basierend zumindest auf einer der ersten oder zweiten Konzentrationen des Analyten und zumindest einer der dritten Konzentrationen des Analyten.

4. Verfahren nach Anspruch 1, wobei die Fluidprobe ein Enzym zumindest aus Glukose-Oxidase oder Glukose-Dehydrogenase sowie einen Mediator zumindest aus Kalium-Hexacyanoferrat oder Ruthenium-Hexamine umfasst.

5. System (100) zum Analysieren eines Analyten in einer Fluidprobe, umfassend:

einen Satz Elektroden (22, 24), welche zur Abwendung einer Potentialanregung auf eine einen Analyten beinhaltende Fluidprobe konfiguriert sind;
einen Prozessor konfiguriert zum:

Messen (220) eines ersten Stroms während eines ersten Zeitsegments, welches auf die Abwendung der Potentialanregung folgt, **dadurch gekennzeichnet, dass** der Prozessor weiter konfiguriert ist zum:

Messen (250) eines zweiten Stroms während eines zweiten Zeitsegments, welches auf die Abwendung der Potentialanregung folgt;
Berechnen (280) einer Mehrzahl erster Konzentrationen des Analyten,
basierend auf dem ersten gemessenen Strom und einer Mehrzahl erster Kalibrierkurven, welche mit dem ersten Zeitsegment verbunden sind;
Berechnen (280) einer Mehrzahl zweiter Konzentrationen des Analyten,
basierend auf dem zweiten gemessenen Strom und einer Mehrzahl zweiter Kalibrierkurven, welche mit dem zweiten Zeitsegment verbunden sind;

Bestimmen (290) einer Endkonzentration des Analyten, basierend zumindest auf einer der ersten Konzentrationen des Analyten oder zumindest einer der zweiten Konzentrationen des Analyten, wobei die Mehrzahl von ersten und zweiten Kalibrierkurven mit unterschiedlichen Hämatokrit-Spiegeln verbunden ist.

6. System nach Anspruch 5, wobei das System weiter konfiguriert ist, um einen Wert anzuzeigen, welcher repräsentativ für die Endkonzentration des Analyten ist.

7. System nach Anspruch 5, weiter umfassend einen Prozessor, konfiguriert zum:

Messen eines dritten Stroms während eines dritten Zeitsegments, welches auf die Abwendung der Potentialanregung folgt;
Berechnen einer Mehrzahl dritter Konzentrationen des Analyten basierend auf dem dritten gemessenen Strom und einer Mehrzahl dritter Kalibrierkurven, welche mit dem dritten Zeitsegment verbunden sind; und
Bestimmen einer Endkonzentration des Analyten basierend zumindest auf einer der ersten oder zweiten Konzentrationen des Analyten und zumindest einer der dritten Konzentrationen des Analyten.

8. System nach Anspruch 5, wobei der Analyt Glukose ist und die Fluidprobe Blut beinhaltet.

9. System nach Anspruch 5, wobei die Fluidprobe ein Enzym zumindest aus einem aus Glukose-Oxidase oder Glukose-Dehydrogenase, sowie einen Mediator zumindest aus Kalium-Hexacyanoferrat oder Ruthenium-Hexamine umfasst.

10. System nach Anspruch 5, wobei die Elektroden des Satzes innerhalb eines Teststreifens enthalten sind.

11. System nach Anspruch 5, wobei der Prozessor innerhalb eines Messgeräts enthalten ist.

**Revendications**

1. Méthode (200) pour l'analyse d'un analyte, les étapes comprenant :

l'application (210) d'une excitation potentielle à un échantillon de fluide contenant un analyte ;
la mesure (220) d'un premier courant pendant un premier segment de temps après l'application de l'excitation potentielle, **caractérisée par** la mesure (250) d'un deuxième courant pendant un deuxième segment de temps après l'application de l'excitation potentielle ;
le calcul (280) d'une pluralité de premières concentrations de l'analyte sur la base du premier courant mesuré et d'un premier jeu de données de calibration associé au premier segment de temps ;
le calcul (280) d'une pluralité de deuxièmes concentrations de l'analyte sur la base du deuxième courant mesuré et d'un deuxième jeu de données de calibration associé au deuxième segment de temps ; et
la détermination (290) d'une concentration finale de l'analyte sur la base d'au moins une des premières concentrations de l'analyte et au moins une des deuxièmes concentrations de l'analyte,
dans laquelle les premiers et deuxièmes jeux de données de calibration sont associés à différent niveaux d'hématocrite.

2. Méthode selon la revendication 1, dans laquelle le premier segment de temps a une durée de moins d'environ deux à dix secondes, et le deuxième segment de temps a une durée supérieure à environ deux à dix secondes.

3. Méthode selon la revendication 1, comprenant en outre :

la mesure d'un troisième courant pendant un troisième segment de temps après l'application de l'excitation potentielle ;
le calcul d'une pluralité de troisièmes concentrations de l'analyte sur la base du troisième courant mesuré et d'un troisième jeu de données de calibration associé au troisième segment de temps ; et
la détermination d'une concentration finale de l'analyte sur la base d'au moins une des premières et deuxièmes concentrations de l'analyte et au moins une des troisièmes concentrations de l'analyte,

4. Méthode selon la revendication 1, dans laquelle l'échantillon de fluide comprend un enzyme d'au moins un élément parmi l'oxydase de glucose et la déshydrogénase de glucose et un médiateur d'au moins un élément parmi le ferricyanide de potassium et l'hexamine de ruthénium.

5. Système (100) pour l'analyse d'un analyte dans un échantillon de fluide, comprenant :

un jeu d'électrodes (22, 24) configurées pour appliquer une excitation potentielle à un échantillon de fluide contenant un analyte ;
un processeur configuré pour :

la mesure (220) d'un premier courant pendant un premier segment de temps après l'application de l'excitation potentielle, **caractérisée en que** le processeur est en outre configuré pour :

la mesure (250) d'un deuxième courant pendant un deuxième segment de temps après l'application de l'excitation potentielle ;

le calcul (280) d'une pluralité de premières concentrations de l'analyte sur la base du premier courant mesuré et d'une pluralité de premières courbes de calibration associées au premier segment de temps ;

le calcul (280) d'une pluralité de deuxièmes concentrations de l'analyte sur la base du deuxième courant mesuré et d'une pluralité de deuxièmes courbes de calibration associées au deuxième segment de temps ; et

la détermination (290) d'une concentration finale de l'analyte sur la base d'au moins une des premières concentrations de l'analyte et au moins une des deuxièmes concentrations de l'analyte,

dans laquelle la pluralité de premières et deuxièmes courbes de calibration sont associées à différent niveaux d'hématocrite.

6. Système selon la revendication 5, étant donné que le système est en outre configuré pour afficher une valeur représentative de la concentration finale de l'analyte.

7. Système selon la revendication 5, comprenant en outre un processeur configuré pour :

la mesure d'un troisième courant pendant un troisième segment de temps après l'application de l'excitation potentielle ;

le calcul d'une pluralité de troisièmes concentrations de l'analyte sur la base du troisième courant mesuré et d'une pluralité de troisièmes courbes de calibration associées au troisième segment de temps ; et

la détermination d'une concentration finale de l'analyte sur la base d'au moins une des premières et deuxièmes concentrations de l'analyte et au moins une des troisièmes concentrations de l'analyte,

8. Système selon la revendication 5, dans lequel l'analyte est le glucose et l'échantillon de fluide comprend le sang.

9. Système selon la revendication 5, dans lequel l'échantillon de fluide comprend un enzyme d'au moins un élément parmi l'oxydase de glucose et la déshydrogénase de glucose et un médiateur d'au moins un élément parmi le ferricyanide de potassium et l'hexamine de ruthénium.

10. Système selon la revendication 5, dans lequel le jeu d'électrodes est contenu dans une bandelette réactive (10).

11. Système selon la revendication 5, dans lequel le processeur est contenu dans un appareil de mesure.

*FIG. 1B*

*FIG. 1A*

108

*FIG. 1C*

**FIG. 2A**

FIG. 2B

EP 2 176 653 B1

200

```
┌─────────────────────┐
│   APPLY POTENTIAL   │
210 │     EXCITATION      │
└─────────────────────┘
           │
           ▼
┌─────────────────────┐
│ MEASURE FIRST CURRENT│
220 │ DURING FIRST TIME-SEGMENT │
└─────────────────────┘
           │
           ▼
```

230

IS
FIRST
CURRENT WITHIN     YES → DETERMINE ANALYTE
FIRST TARGET              CONCENTRATION BASED ON
RANGE?                   FIRST TIME-SEGMENT DATA

240

NO

```
┌─────────────────────┐
│ MEASURE SECOND CURRENT│
250 │    DURING SECOND     │
│    TIME-SEGMENT      │
└─────────────────────┘
```

260

ARE
FIRST AND
SECOND TIME-SEGMENT    YES → DETERMINE ANALYTE
DATA ABOUT                    CONCENTRATION BASED
EQUAL?                        ON MEASURED DATA

270

NO

```
┌────────────────────────────────────┐
│ CALCULATE FIRST AND SECOND ANALYTE │
│ CONCENTRATIONS BASED ON FIRST AND  │  280
│   SECOND CALIBRATION CURVES        │
└────────────────────────────────────┘
           │
           ▼
┌────────────────────────────────────┐
│ DETERMINE FINAL ANALYTE CONCENTRATION │
│   BASED ON FIRST AND SECOND        │  290
│     ANALYTE CONCENTRATIONS         │
└────────────────────────────────────┘
```

*FIG. 3*

**FIG. 4A**

**FIG. 4B**

EP 2 176 653 B1

**FIG. 4C**

EP 2 176 653 B1

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6743635 B
- US 20030096420 A1
- WO 2008011247 A
- US 20070040567 A